# EUROPEAN PATENT SPECIFICATION

(11) **EP 3 108 753 B1**
(45) Date of publication and mention of the grant of the patent: **04.10.2017**
(21) Application number: 15201158.1
(22) Date of filing: 18.12.2015
(51) Int. Cl.: A23L 27/10, A23L 29/00, A23L 33/26, A23L 7/109, A23L 33/21, A23L 23/00

(54) **DIETARY-FIBER CONTAINING NOODLES AND SOUP STOCK AND MANUFACTURING METHODS FOR SAME**
NUDEL- UND SUPPENVORRAT BEINHALTENDER DIÄT-BALASTSTOFF SOWIE ZUGEHÖRIGES HERSTELLUNGSVERFAHREN
NOUILLES ET SOUPE CONTENANT DES FIBRES DIÉTÉTIQUES ET PROCÉDÉS DE FABRICATION CORRESPONDANTS

(30) Priority: 23.06.2015 JP 2015125885; 18.08.2015 JP 2015161318
(43) Date of publication of application: 28.12.2016
(73) Proprietor: Hirano, Yuzuru, Wakayama 644-1111 (JP)
(72) Inventor: Hirano, Yuzuru, Wakayama 644-1111 (JP)
(74) Representative: Kindermann, Peter

(56) References cited:
- EP-A1- 0 540 421
- CN-A- 103 550 274
- CN-B- 103 461 824
- JP-A- 2003 009 820
- US-A1- 2012 034 368

## Description

### FIELD

The present invention relates to: dietary-fiber containing noodles and soup stock serving as functional foods capable of providing physiological effects such as blood sugar level rise suppression, an intestinal regulation effect, and lipid metabolism improvement; and manufacturing methods for the same.

### BACKGROUND

In noodles, such noodles serving as a dietary-fiber functional food are known in which in order that physiological effects such as blood sugar level rise suppression, an intestinal regulation effect, and lipid metabolism improvement may be imparted, indigestible dextrin which is water-soluble dietary fiber is added to wheat flour (e.g., Japanese Laid-Open Patent Publication No. 2006-254901) or beverages and food such as noodles and soups (e.g. US2012/034368). In the dietary fiber, there are a water-insoluble type and a water-soluble type. Then, it is recognized that a water-soluble type is suitable for being added to boiled noodles and, in particular, indigestible dextrin serving as a low-viscosity substance is suitable. In a case that the indigestible dextrin is added and kneaded into wheat flour, the indigestible dextrin is fused with the starch of the wheat flour so that the solubility becomes low and hence release of the content can be maintained at approximately 0. Nevertheless, when the kneaded noodle dough is boiled in hot water bath at a temperature of 97°C (a boiling time of 9 to 15 minutes), the indigestible dextrin is dissolved so that the content of indigestible dextrin is reduced down to approximately 50%. Thus, in the conventional art, first, an aqueous solution containing indigestible dextrin and polysaccharide thickener in a fixed ratio is dried up so that powder of modified starch in which indigestible dextrin and polysaccharide thickener are fused together is obtained. Then, the modified starch is added and kneaded into the wheat flour so that the dissolution of the indigestible dextrin at the time of boiling the noodle dough is prevented.

### SUMMARY

Nevertheless, in the noodles of the conventional art, in order that the content of indigestible dextrin in the boiled noodles may be maintained at a desired level, a larger amount of modified starch in which indigestible dextrin and polysaccharide thickener are fused together need be added. As a result, the noodles become soft and hence the quality is degraded. Further, qualities such as deliciousness, color, eating texture, and flavor are also degraded. On the other hand, in order that the quality may be maintained, when the amount of modified starch in which indigestible dextrin and polysaccharide thickener are fused together is reduced, the amount of indigestible dextrin is also reduced so that physiological effects such as blood sugar level rise suppression, an intestinal regulation effect, and lipid metabolism improvement cannot satisfactorily be obtained and hence the feature as a dietary-fiber functional food is not efficiently utilized.

Further, when the indigestible dextrin is added to SOUP STOCK, physiological effects such as blood sugar level rise suppression, an intestinal regulation effect, and lipid metabolism improvement are expected to be imparted to the soup stock. Nevertheless, when the soup stock containing indigestible dextrin is boiled, the indigestible dextrin is dissolved and hence the content of indigestible dextrin is reduced. As a result, physiological effects such as blood sugar level rise suppression, an intestinal regulation effect, and lipid metabolism improvement cannot satisfactorily be obtained and hence the feature as a dietary-fiber functional food is not efficiently utilized. Further, when the soup stock is boiled for a longer time, unfavorable taste arises more and delicious taste components are less efficiently extracted. Further, salty taste becomes strong.

The present invention has been devised for the purpose of resolving the above-mentioned problems. An object thereof is to provide: dietary-fiber containing noodles serving as a functional food that provides physiological effects such as blood sugar level rise suppression, an intestinal regulation effect, and lipid metabolism improvement and that is delicious and of satisfactory color, eating texture, and flavor; and a manufacturing method for the same.

Further, another object of the present invention is to provide dietary-fiber containing soup stock serving as a functional food in which physiological effects such as blood sugar level rise suppression, an intestinal regulation effect, and lipid metabolism improvement can be obtained and in which unfavorable taste can be removed and delicious taste components can efficiently be extracted; and a manufacturing method for the same. The invention is defined by the appended set of claims.

The dietary-fiber containing noodles of the present invention contain wheat flour, indigestible dextrin serving as dietary fiber, and a fulvic acid mineral seasoning liquid, which contains at least vinegar, fulvic acid and mineral salt.

In the dietary-fiber containing noodles described above, it is preferable that 1 to 10 weight% of indigestible dextrin and 0.3 to 1 weight% of fulvic acid mineral seasoning liquid are added to 100 weight% of wheat flour and that the fulvic acid mineral seasoning liquid contains at least vinegar, fulvic acid, and mineral salt.

The manufacturing method for dietary-fiber containing noodles of the present invention includes: a mixing step of mixing together wheat flour, indigestible dextrin serving as dietary fiber, and a fulvic acid mineral seasoning liquid, which contains at least vinegar, fulvic acid and mineral salt. so as to fabricate noodle dough; a compounding step of compounding the noodle dough fabricated at the mixing step, then forming it into a noodle belt having a belt shape, and then ripening it; a rolling-out step of rolling out thinly the noodle belt ripened at the compounding step; and a slitting step of slitting the noodle belt rolled out thinly at the rolling-out step, so as to fabricate long and thin noodles.

The dietary-fiber containing soup stock of the present invention contains water, indigestible dextrin serving as dietary fiber, and a fulvic acid mineral seasoning liquid.

In the dietary-fiber containing soup stock described above, it is preferable that 1 to 10 weight% of indigestible dextrin and 0.03 to 0.1 weight% of fulvic acid mineral seasoning liquid are added to 100 weight% of water and that the fulvic acid mineral seasoning liquid contains at least vinegar, fulvic acid, and mineral salt.

The manufacturing method for dietary-fiber containing soup stock of the present invention includes: a boiling step of boiling water; a dried-fish-flake supplying step of supplying dried fish flakes into the water boiled at the boiling step and then boiling them; a dried-fish-flake extraction step of performing extraction from the dried fish flakes supplied at the dried-fish-flake supplying step; a blending step of blending indigestible dextrin serving as dietary fiber and a fulvic acid mineral seasoning liquid, which contains at least vinegar, fulvic acid and mineral salt into the water obtained by extraction from the dried fish flakes at the dried-fish-flake extraction step; and a stirring step of stirring the blend liquid obtained at the blending step.

According to the present invention, since the fulvic acid mineral seasoning liquid, which contains at least vinegar, fulvic acid and mineral salt, is contained, the solubility of the indigestible dextrin becomes low and hence dissolution of the indigestible dextrin is suppressed. By virtue of this, when the indigestible dextrin is merely added directly to the wheat flour without the use of modified starch in which indigestible dextrin and polysaccharide thickener are fused together, the content of indigestible dextrin in the boiled noodles can be maintained at a desired level for satisfactorily obtaining physiological effects such as blood sugar level rise suppression, an intestinal regulation effect, and lipid metabolism improvement. Further, modified starch in which indigestible dextrin and polysaccharide thickener are fused together need not be employed and hence qualities such as deliciousness, color, eating texture, and flavor can be obtained. Thus, in a state that qualities such as deliciousness, color, eating texture, and flavor are maintained, physiological effects such as blood sugar level rise suppression, an intestinal regulation effect, and lipid metabolism improvement can satisfactorily be obtained. Further, since it is sufficient that the indigestible dextrin is merely added directly to the wheat flour without the use of modified starch in which indigestible dextrin and polysaccharide thickener are fused together, the working efficiency is satisfactory and the cost can be suppressed. Further, gluten formation becomes satisfactory and hence chewy and glossy noodles are obtained. Further, the thermal conductivity is improved so that boiling is rapidly completed.

Further, according to the present invention, since the fulvic acid mineral seasoning liquid is contained, the solubility of the indigestible dextrin becomes low and hence a decrease in the content of indigestible dextrin in the boiled soup stock can be suppressed. By virtue of this, physiological effects such as blood sugar level rise suppression, an intestinal regulation effect, and lipid metabolism improvement can be obtained. Further, since the fulvic acid mineral seasoning liquid is contained, the thermal conductivity becomes satisfactory and hence the boiling time for the soup stock is reduced. Accordingly, unfavorable taste can be removed and delicious taste components can efficiently be extracted. Further, salty taste is reduced so that mellow taste is obtained. Further, an effect of suppression of growth of standard bacteria is also obtained.

### BRIEF DESCRIPTION OF DRAWINGS

FIG. 1 is a flow chart showing a manufacturing method for dietary-fiber containing noodles according to an embodiment of the present invention.
FIG. 2 is a flow chart showing a manufacturing method for udon noodles [a kind of Japanese noodles made of wheat flour] (boiled) according to Implementation Example 1 of the present invention.
FIG. 3 is a flow chart showing a manufacturing method for Chinese noodles (boiled) according to Implementation Example 2 of the present invention.
FIG. 4 is a flow chart showing a manufacturing method for udon noodles (unboiled) according to Implementation Example 3 of the present invention.
FIG. 5 is a flow chart showing a manufacturing method for Chinese noodles (unboiled) according to Implementation Example 4 of the present invention.
FIG. 6 is a flow chart showing a manufacturing method for dietary-fiber containing soup stock according to an embodiment of the present invention.

### DESCRIPTION OF EMBODIMENTS

### (Dietary-fiber containing noodles and manufacturing method for same)

Dietary-fiber containing noodles and a manufacturing method for the same according to an embodiment are described below with reference to the drawings. The dietary-fiber containing noodles of the present embodiment contain wheat flour, indigestible dextrin serving as dietary fiber, and a fulvic acid mineral seasoning liquid. The indigestible dextrin is dietary fiber having water solubility and low viscosity and provides physiological effects such as blood sugar level rise suppression, an intestinal regulation effect, and lipid metabolism improvement. The fulvic acid mineral seasoning liquid contains vinegar, fulvic acid, calcium, mineral salt, and trehalose. However, it is sufficient that at least vinegar, fulvic acid, and mineral salt are contained. Further, in the dietary-fiber containing noodles of the present embodiment, it is preferable that 1 to 10 weight% of indigestible dextrin and 0.3 to 1 weight% of fulvic acid mineral seasoning liquid are added to 100 weight% of wheat flour. Further, it is preferable that the employed wheat flour is of semi-hard flour (having a protein content of 10 to 12%, which is lower than that of hard flour). Further, wheat gluten, salt, an acidulant, calcium, spirits of wine or alcohol, lye water, or the like may be added further. For example, the dietary-fiber containing noodles of the present invention include instant noodles, udon noodles [a kind of Japanese noodles made of wheat flour] (boiled), Chinese noodles (boiled), udon noodles (unboiled), Chinese noodles (unboiled), thin wheat noodles, cold wheat noodles, buckwheat noodles, pastas, Korean cold noodles.

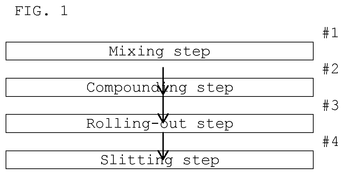

FIG. 1 shows a flow chart of a manufacturing method for the dietary-fiber containing noodles of the present embodiment. The dietary-fiber containing noodles of the present embodiment are fabricated as follows. First, a mixing step of mixing (kneading) together wheat flour, indigestible dextrin serving as dietary fiber, and a fulvic acid mineral seasoning liquid so as to fabricate noodle dough is performed (#1). At that time, it is preferable that 1 to 10 weight% of indigestible dextrin and 0.3 to 1 weight% of fulvic acid mineral seasoning liquid are employed relative to 100 weight% of the wheat flour. Further, is preferable that the employed wheat flour is of semi-hard flour. Further, wheat gluten, salt, and an acidulant may be added further. Further, in accordance with the type of noodles, calcium, spirits of wine or alcohol, lye water, or the like may be added further. The mixing is performed in a state that water is added to these raw materials. It is preferable that the amount of water added in the mixing is 30 to 50 weight% relative to 100 weight% of the wheat flour.

Then, a compounding step of compounding the noodle dough fabricated at the mixing step, then forming it into a noodle belt having a belt shape, and then ripening it is performed (#2). Then, a rolling-out step of rolling out thinly the noodle belt ripened at the compounding step is performed (#3). Then, a slitting step of slitting the noodle belt rolled out thinly at the rolling-out step, so as to fabricate long and thin noodles is performed (#4). Here, a step of ripening the noodle belt may be employed between the rolling-out step and the slitting step. Further, a step of boiling the noodles and a step of cooling the boiled noodles may be employed after the slitting step.

As for the dietary-fiber containing noodles, the elution rate of indigestible dextrin and qualities such as color, eating texture, flavor, and deliciousness were investigated. The results are shown in Table 1. In Table 1, the column "present invention" shows the results of the noodles of the present embodiment and the column "comparison example" shows the results of noodles of a comparison example fabricated for the purpose of comparison with the noodles of the present embodiment.

**[Table 1]**

| | Comp. ex. | Present inv. |
|---|---|---|
| Wheat flour (semi-hard flour) | 87 | 100 |
| Modified starch (A) | 3 | - |
| Modified starch (B) (containing 85% of indigestible dextrin) | 10 | - |
| Indigestible dextrin | 1 | 3 |
| Wheat gluten | 1 | 1 |
| Fulvic acid mineral seasoning liquid | - | 0.38 |
| Salt | 2 | 2 |
| Acidulant | 0.15 | 0.15 |
| Added water | 38 | 38 |
| Boiling time | 97°C, 12 min | 97°C, 9 min |
| Elution rate of water-soluble dietary fiber (calculated) | 30% | 1% |
| Color | Thin white | Deep color specific to wheat |
| Feeling of food going down throat | Ordinary | Satisfactory |
| Hardness | Soft | Satisfactory |
| Sweet taste of wheat | None | Satisfactory |

In the noodles of the comparison example, the employed raw materials were wheat flour (semi-hard flour), modified starch (A), modified starch (B) (powder of modified starch in which indigestible dextrin and polysaccharide thickener are fused together), indigestible dextrin, wheat gluten, salt, and an acidulant. The blend ratios of the wheat flour, the modified starch (A), and the modified starch (B) were 87% of wheat flour, 3% of modified starch (A), and 10% of modified starch (B). The indigestible dextrin, the wheat gluten, the salt, and the acidulant were 1 weight%, 1 weight%, 2 weight%, and 0.15 weight%, respectively, relative to the total amount 100 weight% of the wheat flour, the modified starch (A), and the modified starch (B). The fulvic acid mineral seasoning liquid is not added to the noodles of the comparison example. The noodles of the comparison example were fabricated by adding water to these raw materials and then performing process steps similar to the above-mentioned #1 to #4. The added water was 38 weight% relative to the total amount 100 weight% of the wheat flour, the modified starch (A), and the modified starch (B).

In contrast, in the noodles of the present embodiment, the employed raw materials were wheat flour (semi-hard flour), indigestible dextrin, wheat gluten, a fulvic acid mineral seasoning liquid, salt, and an acidulant. The indigestible dextrin, the wheat gluten, the fulvic acid mineral seasoning liquid, the salt, and the acidulant were 3 weight%, 1 weight%, 0.38 weight%, 2 weight%, and 0.15 weight%, respectively, relative to 100 weight% of the wheat flour. The modified starch (A) and the modified starch (B) were not added to the noodles of the present invention. The noodles of the present embodiment were fabricated by adding water to these raw materials and then performing process steps similar to the above-mentioned #1 to #4. The added water was 38 weight% relative to 100 weight% of the wheat flour.

As a result of boiling the noodles of the comparison example and the noodles of the present embodiment fabricated as described above, in the noodles of the comparison example, the elution rate of indigestible dextrin (the elution rate of water-soluble dietary fiber) was 30%. In contrast, in the noodles of the present embodiment, the elution rate of indigestible dextrin was 1%. As such, the noodles of the present embodiment has a remarkably low elution rate of indigestible dextrin and hence dissolution of the indigestible dextrin is remarkably suppressed. Expectedly, the reason is attributed to the difference between non-addition of the fulvic acid mineral seasoning liquid in the noodles of the comparison example and addition of the fulvic acid mineral seasoning liquid in the noodles of the present embodiment.

Further, in the noodles of the comparison example, the noodles had a thin white color (not a satisfactory color). In contrast, in the noodles of the present embodiment, the noodles had a deep color specific to wheat (a satisfactory color). Further, in the noodles of the comparison example, the feeling of the food going down one's throat was ordinary. In contrast, in the noodles of the present embodiment the feeling of the food going down one's throat was satisfactory (the eating texture was satisfactory). Further, in the noodles of the comparison example, the hardness was soft (the eating texture was not satisfactory). In contrast, in the noodles of the present embodiment, the hardness was sufficient (the eating texture was satisfactory). Further, in the noodles of the comparison example, sweet taste of wheat was lost (the deliciousness and the flavor were not satisfactory). In contrast, in the noodles of the present embodiment, there was sweet taste of wheat (the deliciousness and the flavor were satisfactory). As such, in the noodles of the present embodiment, excellent qualities were obtained in the color, the eating texture, the flavor, the deliciousness, and the like. Expectedly, the reason is attributed to the difference between addition of the modified starch (B) in the noodles of the comparison example and non-addition of the modified starch (B) in the noodles of the present embodiment.

Further, in the noodles of the present embodiment, similar results were obtained even in a case that 1 to 10 weight% of indigestible dextrin, 1 to 3 weight% of wheat gluten, 0.3 to 1 weight% of fulvic acid mineral seasoning liquid, 0.5 to 3 weight% of salt, and 30 to 50 weight% of added water, each relative to the wheat flour, were employed and that the boiling time was 4 to 15 minutes.

### [Implementation Example 1]

Udon noodles (boiled) were fabricated as the dietary-fiber containing noodles of the present implementation example.

The employed raw materials were
75 kg of wheat flour (semi-hard flour),
750 g (1 weight% relative to the wheat flour) of indigestible dextrin,
285 g (0.38 weight% relative to the wheat flour) of fulvic acid mineral seasoning liquid,
1.5 kg (2 weight% relative to the wheat flour) of wheat gluten,
1.8 kg (2.4 weight% relative to the wheat flour) of salt, and
110 g (0.15 weight% relative to the wheat flour) of acidulant.

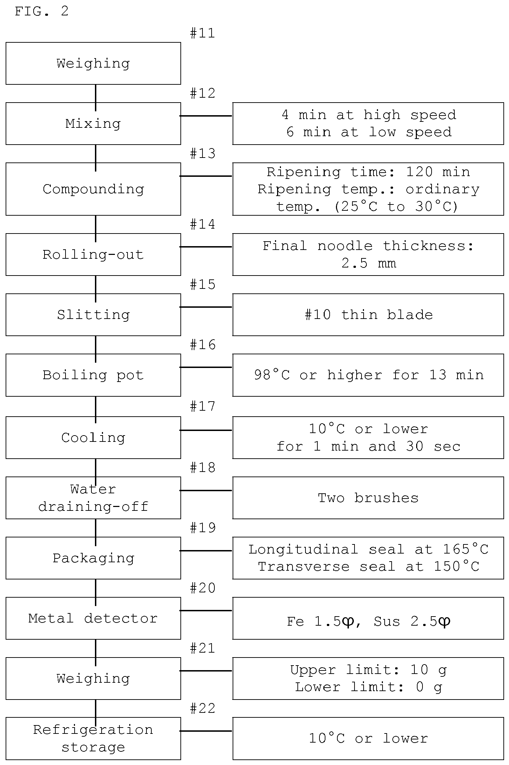

FIG. 2 shows a flow chart of a manufacturing method for the udon noodles (boiled) described above. The udon noodles (boiled) are fabricated as follows. First, the above-mentioned raw materials are weighed (#11). Then, 28.5 kg (38 weight% relative to the wheat flour) of water is added to these raw materials and then mixing (kneading) is performed so that noodle dough is fabricated (#12, a mixing step). The mixing of the raw materials is performed for 6 minutes at a low speed for and for 4 minutes at a high speed. Then, the fabricated noodle dough is compounded, then formed into a noodle belt having a belt shape, and then ripened (#13, a compounding step) . The ripening time for the noodle belt is 120 minutes and the ripening temperature is an ordinary temperature of 25°C to 30°C. Then, the ripened noodle belt is rolled out thinly (#14, a rolling-out step). In the rolling out of the noodle belt, the final noodle thickness is set to be 2.5 mm. Then, the noodle belt rolled out thinly is slit so that long and thin noodles are fabricated (#15, a slitting step). Then, the slit noodles are boiled in a boiling pot (#16), then the boiled noodles are cooled down (#17), and then water is drained off (#18). The boiling of noodles is performed at 98°C or higher for 13 minutes. The cooling of noodles is performed at 10 °C or lower for 1 minute and 30 seconds. Then, the noodles from which water has been drained off are packaged (#19), then foreign matter inspection is performed by using a metal detector (#20), then weight measurement is performed (#21), and then refrigeration storage is performed (#22).

### [Implementation Example 2]

Chinese noodles (boiled) were fabricated as the dietary-fiber containing noodles of the present implementation example.

The employed raw materials were
75 kg of wheat flour (semi-hard flour),
750 g (1 weight% relative to the wheat flour) of indigestible dextrin,
1.5 kg (2 weight% relative to the wheat flour) of wheat gluten,
285 g (0.38 weight% relative to the wheat flour) of fulvic acid mineral seasoning liquid,
600 g (0.8 weight% relative to the wheat flour) of salt,
120 g (0.16 weight% relative to the wheat flour) of lye water, and
12 g (0.02 weight% relative to the wheat flour) of gardenia pigment.

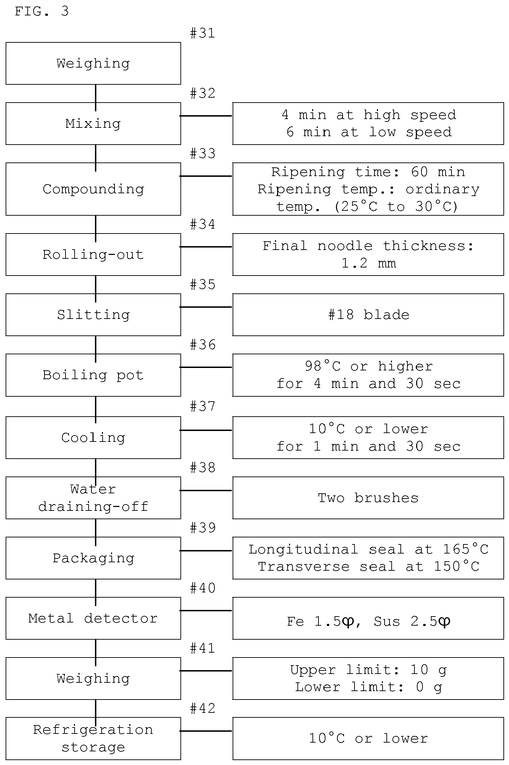

FIG. 3 shows a flow chart of a manufacturing method for the Chinese noodles (boiled) described above. The above-mentioned Chinese noodles (boiled) are fabricated as follows. First, the above-mentioned raw materials are weighed (#31). Then, similarly to the case of udon noodles (boiled) of Implementation Example 1 described above, these raw materials are mixed together so that noodle dough is fabricated (#32, a mixing step). Then, the noodle dough is compounded, then formed into a noodle belt having a belt shape, and then ripened (#33, a compounding step). Then, the noodle belt is rolled out thinly (#34, a rolling-out step). Here, the ripening time for the noodle belt is 60 minutes and, in the rolling out of the noodle belt, the final noodle thickness is set to be 1.2 mm. Then, similarly to the case of udon noodles (boiled) of Implementation Example 1 described above, the noodle belt is slit so that long and thin noodles are fabricated (#35, a slitting step). Then, the noodles are boiled in a boiling pot (#36), then the boiled noodles are cooled down (#37), and then water is drained off (#38). Here, the boiling time for the noodles is 4 minutes and 30 seconds. Then, similarly to the case of udon noodles (boiled) of Implementation Example 1 described above, the noodles from which water has been drained off are packaged (#39), then foreign matter inspection is performed by using a metal detector (#40), then weight measurement is performed (#41), and then refrigeration storage is performed (#42).

### [Implementation Example 3]

Udon noodles (unboiled) were fabricated as the dietary-fiber containing noodles of the present implementation example.

The employed raw materials were
75 kg of wheat flour (semi-hard flour),
750 g (1 weight% relative to the wheat flour) of indigestible dextrin,
285 g (0.38 weight% relative to the wheat flour) of fulvic acid mineral seasoning liquid,
1.5 kg (2 weight% relative to the wheat flour) of wheat gluten,
1.8 kg (2.4 weight% relative to the wheat flour) of salt,
110 g (0.15 weight% relative to the wheat flour) of an acidulant, and
500 g (0.67 weight% relative to the wheat flour) of spirits of wine.

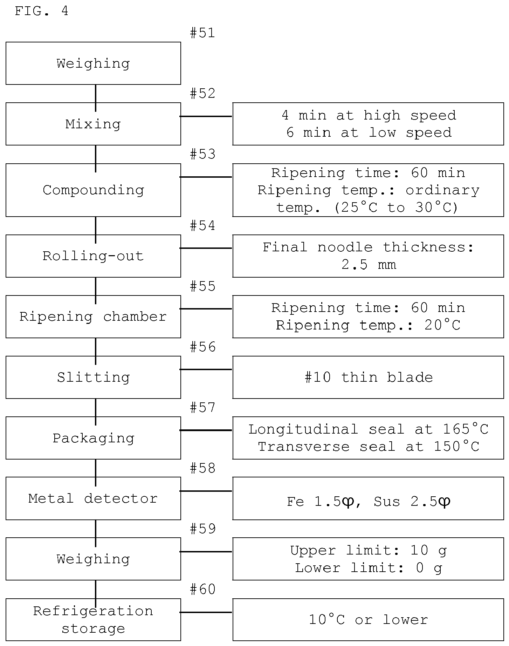

FIG. 4 shows a flow chart of a manufacturing method for the udon noodles (unboiled) described above. The udon noodles (unboiled) are fabricated as follows. First, the above-mentioned raw materials are weighed (#51). Then, similarly to the case of udon noodles (boiled) of Implementation Example 1 described above, these raw materials are mixed together so that noodle dough is fabricated (#52, a mixing step). Then, the noodle dough is compounded, then formed into a noodle belt having a belt shape, and then ripened (#53, a compounding step). Then, the noodle belt is rolled out thinly (#54, a rolling-out step). Here, the ripening time for the noodle belt is set to be 60 minutes. Then, the noodle belt rolled out thinly is ripened in a ripening chamber (#55). The ripening time for the noodle belt is set to be 60 minutes and the ripening temperature is set to be 20°C. Then, the ripened noodle belt is slit so that long and thin noodles are fabricated (#56, a slitting step). Then, similarly to the case of udon noodles (boiled) of Implementation Example 1 described above, the noodles are packaged (#57), then foreign matter inspection is performed by using a metal detector (#58), then weight measurement is performed (#59), and then refrigeration storage is performed (#60).

### [Implementation Example 4]

Chinese noodles (unboiled) were fabricated as the dietary-fiber containing noodles of the present implementation example.

The employed raw materials were
75 kg of wheat flour (semi-hard flour),
750 g (1 weight% relative to the wheat flour) of indigestible dextrin,
1.5 kg (2 weight% relative to the wheat flour) of wheat gluten,
285 g (0.38 weight% relative to the wheat flour) of fulvic acid mineral seasoning liquid,
600 g (0.8 weight% relative to the wheat flour) of salt,
500 g (0.67 weight% relative to the wheat flour) of calcium,
500 g (0.67 weight% relative to the wheat flour) of spirits of wine,
120 g (0.16 weight% relative to the wheat flour) of lye water, and
12 g (0.02 weight% relative to the wheat flour) of gardenia pigment.

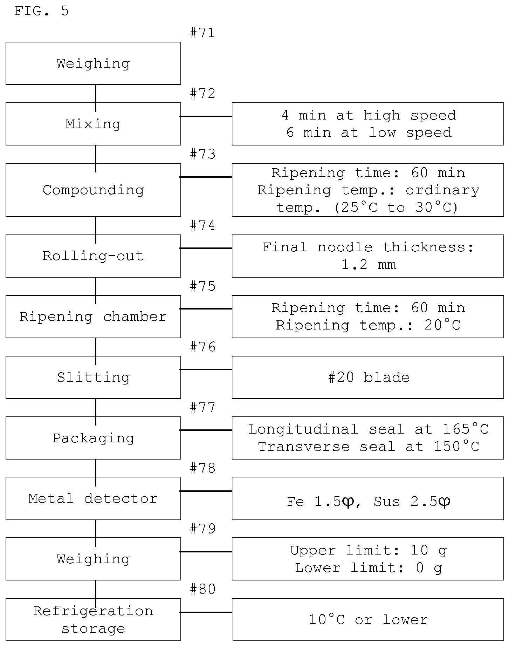

FIG. 5 shows a flow chart of a manufacturing method for the Chinese noodles (unboiled) described above. The Chinese noodles (unboiled) are fabricated as follows. First, the above-mentioned raw materials are weighed (#71). Then, similarly to the case of udon noodles (boiled) of Implementation Example 1 described above, these raw materials are mixed together so that noodle dough is fabricated (#72, a mixing step). Then, the noodle dough is compounded, then formed into a noodle belt having a belt shape, and then ripened (#73, a compounding step). Then, the noodle belt is rolled out thinly (#74, a rolling-out step). Here, the ripening time for the noodle belt is set to be 60 minutes. Then, the noodle belt rolled out thinly is ripened in a ripening chamber (#75). The ripening time for the noodle belt is set to be 60 minutes and the ripening temperature is set to be 20°C. Then, the ripened noodle belt is slit so that long and thin noodles are fabricated (#76, a slitting step). Then, similarly to the case of udon noodles (boiled) of Implementation Example 1 described above, the noodles are packaged (#77), then foreign matter inspection is performed by using a metal detector (#78), then weight measurement is performed (#79), and then refrigeration storage is performed (#80).

According to the various embodiments described above, since the fulvic acid mineral seasoning liquid is contained, the solubility of the indigestible dextrin becomes low and hence dissolution of the indigestible dextrin is suppressed. By virtue of this, when the indigestible dextrin is merely added directly to the wheat flour without the use of modified starch (B) (modified starch in which indigestible dextrin and polysaccharide thickener are fused together), the content of indigestible dextrin in the boiled noodles can be maintained at a desired level for satisfactorily obtaining physiological effects such as blood sugar level rise suppression, an intestinal regulation effect, and lipid metabolism improvement. Further, since the modified starch (B) need not be employed, qualities such as deliciousness, color, eating texture, and flavor can be obtained. Thus, in a state that qualities such as deliciousness, color, eating texture, and flavor are maintained, physiological effects such as blood sugar level rise suppression, an intestinal regulation effect, and lipid metabolism improvement can satisfactorily be obtained. Further, since it is sufficient that the indigestible dextrin is merely added directly to the wheat flour without the use of modified starch (B), the working efficiency is satisfactory and hence the cost can be suppressed. Further, gluten formation becomes satisfactory and hence chewy and glossy noodles are obtained. Further, the thermal conductivity is improved so that boiling is rapidly completed.

Here, the present invention is not limited to the configurations of the embodiments described above and various modifications may be made. For example, the employed wheat flour is not limited to semi-hard flour and may be hard flour, medium flour, or the like. Further, the content of the employed wheat gluten may be less than 1 weight% relative to the wheat flour or, alternatively, may exceed 10 weight% relative to the wheat flour. Further, the modified starch (A) or the modified starch (B) may be contained to an extent that the qualities are not affected.

### (Dietary-fiber containing soup stock and manufacturing method for same)

Next, dietary-fiber containing soup stock and a manufacturing method for the same according to an embodiment are described below with reference to the drawings. The dietary-fiber containing soup stock of the present embodiment contains water, indigestible dextrin serving as dietary fiber, and a fulvic acid mineral seasoning liquid. The indigestible dextrin is dietary fiber having water solubility and low viscosity and provides physiological effects such as blood sugar level rise suppression, an intestinal regulation effect, and lipid metabolism improvement. The fulvic acid mineral seasoning liquid contains vinegar, fulvic acid, calcium, mineral salt, and trehalose. However, it is sufficient that at least vinegar, fulvic acid, and mineral salt are contained. Further, in the dietary-fiber containing soup stock, it is preferable that 1 to 10 weight% of indigestible dextrin and 0.03 to 0.1 weight% of fulvic acid mineral seasoning liquid are added to 100 weight% of water. Further, concentrated udon-noodle soup stock, rice-wine seasoning ("sakashio"), dried fish flakes, or the like may be added further. The rice-wine seasoning is employed for utilizing the flavor and the sweet taste of sweet cooking rice wine ("mirin") and the dried fish flakes are employed for utilizing the flavor of the dried bonito. For example, the dietary-fiber containing soup stock is used for udon noodles, buckwheat-noodle soup stock, "zouni" [translator's note: rice cakes boiled in vegetable soup], "kayaku gohan" [translator's note: boiled rice blended with meat and vegetables], "tempura" soup, "chawan-mushi", "sukiyaki" soup stock, and the like.

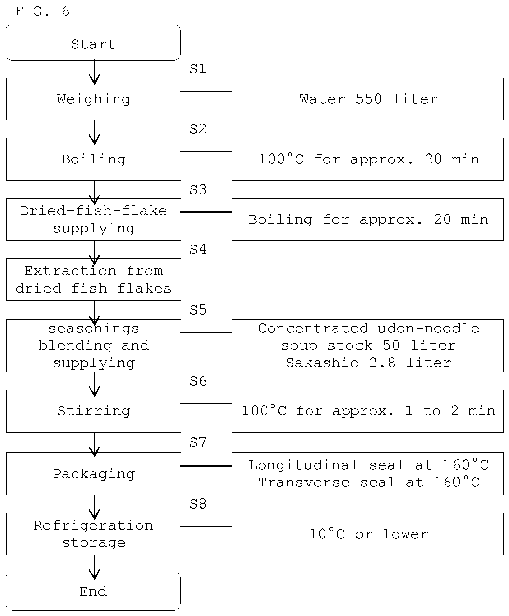

FIG. 6 shows a flow chart of a manufacturing method for the dietary-fiber containing soup stock of the present embodiment. The dietary-fiber containing soup stock of the present embodiment are fabricated as follows. First, a weighing step of weighing the raw materials is performed (S1). At that time, the employed raw materials are 550 1 (550 kg) of water, 50 1 (9 weight% relative to the water) of concentrated udon-noodle soup stock, 2.81 (5 weight% relative to the water) of rice-wine seasoning, 2 kg (0.36 weight% relative to the water) of dried fish flakes, 16.5 1 (3 weight% relative to the water) of indigestible dextrin, and 0.26 1 (0.047 weight% relative to the water) of fulvic acid mineral seasoning liquid.

Then, a boiling step of boiling 550 1 of water weighed at the weighing step is performed (S2). The boiling is performed at 100°C for approximately 20 minutes. Then, a dried-fish-flake supplying step of supplying the dried fish flakes into the water boiled at the boiling step and then boiling them is performed (S3). At that time, the dried fish flakes weighed at the weighing step are supplied and then the boiling to be performed after the dried fish flakes have been supplied is performed for approximately 20 minutes. Then, a dried-fish-flake extraction step of extracting from the dried fish flakes supplied at the dried-fish-flake supplying step is performed (S4).

Then, a blending step of blending the indigestible dextrin serving as dietary fiber and the fulvic acid mineral seasoning liquid into the water obtained by extraction from the dried fish flakes at the dried-fish-flake extraction step is performed (S5). At that time, the indigestible dextrin and the fulvic acid mineral seasoning liquid having been weighed at the weighing step are blended. Further, the concentrated udon-noodle soup stock and the rice-wine seasoning weighed at the weighing step are blended similarly. Then, a stirring step of stirring the blend liquid obtained at the blending step is performed (S6). The stirring is performed at 100°C for approximately 1 to 2 minutes. As a result, the dietary-fiber containing soup stock is obtained. Then, a packaging step of packaging the soup stock is performed (S7). After that, a storage step of performing refrigeration storage is performed (S8). The package capacity for the soup stock is 350 cc and the refrigeration storage is performed at 10°C or lower.

According to the present embodiment, since the fulvic acid mineral seasoning liquid is contained, the solubility of the indigestible dextrin becomes low and hence a decrease in the content of indigestible dextrin in the boiled soup stock can be suppressed. By virtue of this, physiological effects such as blood sugar level rise suppression, an intestinal regulation effect, and lipid metabolism improvement can be obtained. Further, since the fulvic acid mineral seasoning liquid is contained, the thermal conductivity becomes satisfactory and hence the boiling time for the soup stock is reduced (30 to 40 minutes in the conventional art is reduced into 20 minutes). Further, unfavorable taste can be removed and delicious taste components can efficiently be extracted. Further, salty taste is reduced so that mellow taste is obtained. Further, an effect of suppression of growth of standard bacteria is also obtained.

Here, the present invention is not limited to the configurations of the embodiments described above and various modifications may be made. For example, in addition to the indigestible dextrin, the fulvic acid mineral seasoning liquid, the concentrated udon-noodle soup stock, the rice-wine seasoning, and the dried fish flakes, other additives may be added further to an extent that the qualities are not affected. Further, at the dried-fish-flake supplying step, the time of boiling performed after the dried fish flakes have been supplied is not limited to approximately 20 minutes and may be another value. Further, at the stirring step, the conditions of stirring are not limited to 100°C and approximately 1 to 2 minutes and may be another temperature and another time.

## Claims

1. Dietary-fiber containing noodles containing wheat flour, indigestible dextrin serving as dietary fiber, and a fulvic acid mineral seasoning liquid, wherein the fulvic acid mineral seasoning liquid contains at least vinegar, fulvic acid, and mineral salt.

2. The dietary-fiber containing noodles according to claim 1, wherein 1 to 10 weight% of indigestible dextrin and 0.3 to 1 weight% of the fulvic acid mineral seasoning liquid are added to 100 weight% of wheat flour.

3. A manufacturing method for dietary-fiber containing noodles comprising:
a mixing step of mixing together wheat flour, indigestible dextrin serving as dietary fiber, and a fulvic acid mineral seasoning liquid, wherein the fulvic acid mineral seasoning liquid contains at least vinegar, fulvic acid, and mineral salt, so as to fabricate noodle dough;
a compounding step of compounding the noodle dough fabricated at the mixing step, then forming it into a noodle belt having a belt shape, and then ripening it;
a rolling-out step of rolling out thinly the noodle belt ripened at the compounding step; and
a slitting step of slitting the noodle belt rolled out thinly at the rolling-out step, so as to fabricate long and thin noodles.

4. Dietary-fiber containing soup stock containing water, indigestible dextrin serving as dietary fiber, and a fulvic acid mineral seasoning liquid, wherein the fulvic acid mineral seasoning liquid contains at least vinegar, fulvic acid, and mineral salt.

5. The dietary-fiber containing soup stock according to claim 4, wherein 1 to 10 weight% of indigestible dextrin and 0.03 to 0.1 weight% of the fulvic acid mineral seasoning liquid are added to 100 weight% of water.

6. A manufacturing method for dietary-fiber containing soup stock comprising:
a boiling step of boiling water;
a dried-fish-flake supplying step of supplying dried fish flakes into the water boiled at the boiling step and then boiling them;
a dried-fish-flake extraction step of performing extraction from the dried fish flakes supplied at the dried-fish-flake supplying step;
a blending step of blending indigestible dextrin serving as dietary fiber and a fulvic acid mineral seasoning liquid, wherein the fulvic acid mineral seasoning liquid contains at least vinegar, fulvic acid, and mineral salt, into the water obtained by extraction from the dried fish flakes at the dried-fish-flake extraction step; and
a stirring step of stirring the blend liquid obtained at the blending step.

## Patentansprüche

1. Diät-Ballaststoff mit Nudeln, enthaltend Weizenmehl, unverdauliches Dextrin, das als Ballaststoff dient, und eine Fulvinsäure-Mineralwürzmittelflüssigkeit, wobei die Fulvinsäure-Mineralwürzmittelflüssigkeit zumindest Essig, Fulvinsäure und Mineralsalz enthält.

2. Diät-Ballaststoff mit Nudeln nach Patentanspruch 1, wobei 1 bis 10 Gewichtsprozent unverdauliches Dextrin und 0,3 bis 1 Gewichtsprozent der Fulvinsäure-Mineralwürzmittelflüssigkeit zu 100 Gewichtsprozent Weizenmehl hinzugefügt sind.

3. Herstellungsverfahren für Diät-Ballaststoffe mit Nudeln mit:
einem Mischschritt zum Mischen von Weizenmehl, unverdaulichem Dextrin, das als Ballaststoff dient, und einer Fulvinsäure-Mineralwürzmittelflüssigkeit, um Nudelteig herzustellen, wobei die Fulvinsäure-Mineralwürzmittelflüssigkeit zumindest Essig, Fulvinsäure und Mineralsalz enthält;
einem Zusammenfügeschritt zum Anrühren des Nudelteigs, der bei dem Mischschritt hergestellt wurde, und dann zum Ausbilden eines Nudelbandes mit einer Bandform, und dann zum Reifen;
einem Ausrollschritt zum dünnen Ausrollen des Nudelbandes, der bei dem Zusammenfügeschritt gereift ist; und
einem Längsschneide-Schritt zum Längsschneiden des bei dem Ausrollschritt dünn ausgerollten Nudelbandes, wodurch lange und dünne Nudeln hergestellt werden.

4. Diät-Ballaststoff mit Suppenvorrat, enhaltend Wasser, unverdauliches Dextrin, das als Ballaststoff dient, und eine Fulvinsäure-Mineralwürzmittelflüssigkeit, wobei die Fulvinsäure-Mineralwürzmittelflüssigkeit zumindest Essig, Fulvinsäure und Mineralsalz enthält.

5. Diät-Ballaststoff mit Suppenvorrat nach Patentanspruch 4, wobei 1 bis 10 Gewichtsprozent unverdauliches Dextrin und 0,03 bis 0,1 Gewichtsprozent der Fulvinsäure-Mineralwürzmittelflüssigkiet zu 100 Gewichtsprozent Wasser hinzugefügt sind.

6. Herstellungsverfahren für Diät-Ballaststoffe mit Suppenvorrat mit:
einem Siedeschritt zum Kochen von Wasser;
einem Trockenfischflocke-Zugabeschritt zum Zugeben von getrockneten Fischflocken in das beim Siedeschritt gekochte Wasser und einem nachfolgenden Kochen;
einem Trockenfischflocke-Extraktionsschritt zum Durchführen einer Extraktion aus den bei dem Trockenfischflocke-Zugabeschritt zugegebenen getrockneten Fischflocken;
einem Abmischungsschritt zum Abmischen von unverdaulichem Dextrin, das als Ballaststoff dient, und einer Fulvinsäure-Mineralwürzmittelflüssigkeit in das Wasser, das durch Extraktion aus den getrockneten Fischflocken im Trockenfischflocke-Extraktionsschritt erhalten wird, wobei die Fulvinsäure-Mineralwürzmittelflüssigkeit zumindest Essig, Fulvinsäure und Mineralsalz enthält; und
einem Rührschritt zum Rühren der im Abmischungsschritt erhaltenen Abmischungsflüssigkeit.

## Revendications

1. Nouilles contenant des fibres alimentaires, contenant de la farine de blé, de la dextrine indigestible servant de fibres alimentaires, et un liquide d'assaisonnement minéral à base d'acide fulvique, où le liquide d'assaisonnement minéral à base d'acide fulvique contient au moins du vinaigre, de l'acide fulvique, et un sel minéral.

2. Nouilles contenant des fibres alimentaires selon la revendication 1, où de 1 à 10% en poids de dextrine indigestible et de 0,3 à 1% en poids du liquide d'assaisonnement minéral à base d'acide fulvique sont ajoutés à 100% en poids de farine de blé.

3. Procédé de fabrication de nouilles contenant des fibres alimentaires, comprenant :
une étape de pétrissage consistant à pétrir ensemble de la farine de blé, de la dextrine indigestible servant de fibres alimentaires, et un liquide d'assaisonnement minéral à base d'acide fulvique, où le liquide d'assaisonnement minéral à base d'acide fulvique contient au moins du vinaigre, de l'acide fulvique, et un sel minéral, de façon à fabriquer une pâte pour nouilles ;
une étape de compoundage consistant à compounder la pâte pour nouilles fabriquée à l'étape de pétrissage, puis la façonner en une lanière de nouille ayant une forme de lanière, puis la laisser maturer ;
une étape de laminage consistant à laminer en couche mince la lanière de nouille maturée à l'étape de compoundage ; et
une étape d'incision consistant à inciser la lanière de nouille laminée en couche mince à l'étape de laminage, de façon à fabriquer des nouilles longues et fines.

4. Base de soupe contenant des fibres alimentaires contenant de l'eau, de la dextrine indigestible servant de fibres alimentaires, et un liquide d'assaisonnement minéral à base d'acide fulvique, où le liquide d'assaisonnement minéral à base d'acide fulvique contient au moins du vinaigre, de l'acide fulvique, et un sel minéral.

5. Base de soupe contenant des fibres alimentaires selon la revendication 4, où de 1 à 10% en poids de dextrine indigestible et de 0,03 à 0,1% en poids du liquide d'assaisonnement minéral à base d'acide fulvique sont ajoutés à 100% en poids d'eau.

6. Méthode de fabrication d'une base de soupe contenant des fibres alimentaires, comprenant :
une étape d'ébullition consistant à faire bouillir de l'eau ;
une étape de fourniture de flocons de poisson séché consistant à fournir des flocons de poisson séché dans l'eau bouillante à l'étape d'ébullition puis à les faire bouillir ;
une étape d'extraction des flocons de poisson séché consistant à mettre en oeuvre une extraction à partir des flocons de poisson séché fournis à l'étape de fourniture de flocons de poisson séché ;
une étape de mélange consistant à mélanger de la dextrine indigestible servant de fibres alimentaires et un liquide d'assaisonnement minéral à base d'acide fulvique, où le liquide d'assaisonnement minéral à base d'acide fulvique contient au moins du vinaigre, de l'acide fulvique, et un sel minéral, dans l'eau obtenue par extraction à partir des flocons de poisson séché à l'étape d'extraction des flocons de poisson séché ; et
une étape d'agitation consistant à agiter le liquide mélangé obtenu à l'étape de mélange.
